# EUROPEAN PATENT APPLICATION

(11) **EP 2 530 456 A1**
(43) Date of publication of application: **05.12.2012**
(21) Application number: 11736931.4
(22) Date of filing: 21.01.2011
(51) Int. Cl.: G01N 21/76, B08B 9/02, C12M 1/34, A61L 2/18, G01N 1/00, G01N 35/10

(54) **METHOD OF WASHING PIPE OF LIGHT-EMISSION MEASURING DEVICE AND MECHANISM FOR WASHING PIPE OF LIGHT-EMISSION MEASURING DEVICE**

(30) Priority: 26.01.2010 JP 2010014133
(71) Applicant: Hitachi Plant Technologies, Ltd., Tokyo 170-8466 (JP)
(72) Inventor: MIYASHITA, Noe, Tokyo 170-8466 (JP)
(74) Representative: Beetz & Partner
(86) International application number: PCT/JP2011/051068
(87) International publication number: WO 2011/093218

(57) **Abstract**

[Problem]

An object of the present invention is to provide pipe cleaning means that can effectively control introduction of viable bacteria to an inside of an apparatus and contamination occurring in the apparatus and particularly provide a pipe cleaning method and a pipe cleaning mechanism in a luminescence measurement apparatus.

[Solution]

A cleaning method of a pipe of a luminescence measurement apparatus (10) according to the present invention includes a bacteriolytic process of supplying a sterilization reagent into a supply pipe for hot water or a reagent in the luminescence measurement apparatus (10) and sterilizing an inside of the supply pipe, an ATP removal process of supplying an ATP removal reagent into the supply pipe after the sterilization of the inside of the supply pipe and removing ATP inside the supply pipe, and a process of replacing the ATP removal reagent in the supply pipe with pure water.

## Description

### Technical Field

The present invention relates to a pipe cleaning method for a luminescence measurement apparatus and a pipe cleaning mechanism of a luminescence measurement apparatus and relates particularly to a method and mechanism for effectively and automatically cleaning a pipe of a luminescence measurement apparatus.

### Background Art

The number of microorganisms (airborne bacteria) in the air (viable bacteria count), falling bacteria, adhesive bacteria, and so on are counted under an environment requiring asepsis and biological cleanliness, such as various clinical medicines, food factories, medicinal product manufacturing factories, and sites of fundamental researches. As a method of measuring airborne bacteria, in order to collect the airborne bacteria, an airborne bacteria sampler for collecting floating bacteria by natural fall of floating bacteria and by suctioning a certain amount of air has been commonly employed.

In the above methods, ordinarily, floating bacteria are collected on an agar plate medium, cultured by an incubator for two to three days, and a number of colonies generated after the culture is counted as the number of viable bacteria. However, this method has a problem that it requires long time to culture viable bacteria.

Meanwhile, as a method capable of counting the number of microorganisms in short time, a method of converting the number of microorganisms by measuring Adenosine TriPhosphate (ATP) as an intracellular component by a bioluminescence method is well known.

The bioluminescence method employs a luciferin-luciferase luminescence reaction, where a luminescence reagent containing basic luciferin and enzyme luciferase is mixed with a sample solution containing ATP extracted from a cell of microorganism, ATP amount is obtained from a luminescence amount which is produced by the reaction, and the number of viable bacteria is calculated based on ATP amount per one viable bacterium. Patent Literature 1 discloses a kit for counting the number of viable bacteria by using such the luminescence reaction.

According to a method of counting the number of viable bacteria by the kit disclosed in Patent Literature 1, it is possible to achieve the assured effect in terms of reduction of measurement time. However, when ultra minute amount of viable bacteria is to be counted, a luminescence amount itself is minute. Therefore, there is a problem of great influence of background luminescence caused by such as inclusion of residual ATP and ATP not to be counted, and good measurement accuracy cannot be obtained.

Meanwhile, Patent Literature 2 discloses a luminescence measurement apparatus which suppresses viable bacteria adhered to a nozzle for dispensing a reagent and background luminescence derived from residual ATP and can perform luminescence measurement accurately and promptly.

### Citation List

### Patent Literature

Patent Literature 1: Japanese Patent Application Laid-Open No. 11-155597
Patent Literature 2: Japanese Patent Application Laid-Open No. 2008-249628

### Summary of the Invention

### Technical Problem

According to the luminescence measurement apparatus disclosed in the Patent Literature 2, it is considered possible to perform luminescence measurement accurately and promptly even though minute amount of viable bacteria is luminescence-counted. However, in a case where viable bacteria count in minute amount is possible by the apparatus disclosed in Patent Literature 2, contamination inside the apparatus exerts great influence on a count value.

For example, a reagent used for luminescence measurement is set in the apparatus after it is opened outside the apparatus, so there is a possibility of contamination occurred during a period from opening to setting in the apparatus.
Further, in the conventional art, according to manual luminescence measurement, a pipette and so on used when a reagent, a sample, and so on are dispensed are disposable and not required to be cleaned. However, when the above luminescence measurement apparatus is automated, there is required to establish a cleaning method of a reagent nozzle and a pipe connected to the nozzle easily and effectively in order to enhance measurement accuracy and sensitivity.

Thus, the present invention provides pipe cleaning means that can effectively control introduction of viable bacteria to an inside of the apparatus and occurrence of contamination inside the apparatus and particularly provides a pipe cleaning method and a pipe cleaning mechanism in a luminescence measurement apparatus.

### Solution to Problem

According to the present invention, there is provided a cleaning method of a pipe of a luminescence measurement apparatus including: a bacteriolytic step of supplying a sterilization reagent into a supply pipe for hot water or a reagent in the luminescence measurement apparatus and sterilizing an inside of the supply pipe; an ATP removal step of supplying an ATP removal reagent into the supply pipe after the sterilization of the inside of the supply pipe and removing ATP inside the supply pipe; and a step of replacing the ATP removal reagent in the supply pipe with pure water.

According to the present invention, there is provided a cleaning method of a pipe of a luminescence measurement apparatus including: a bacteriolytic step of supplying a sterilization reagent from a hot-water supply nozzle from which hot water is supplied to a collection carrier to a membrane filter provided in a pipe on the upstream side of the hot-water supply nozzle and sterilizing an inside of the pipe; an ATP removal step of supplying an ATP removal reagent from the hot-water supply nozzle to the membrane filter and removing ATP in the pipe; and a step of replacing the ATP removal reagent in a course from the hot-water supply nozzle to the membrane filter with a hot-water buffer.

According to the present invention, there is provided a cleaning method of a pipe of a luminescence measurement apparatus including: a bacteriolytic step of supplying a sterilization reagent from a buffer supply section to a reagent dispensing section and sterilizing an inside of a pipe of the reagent dispensing section; an ATP removal step of supplying an ATP removal reagent from the buffer supply section to the reagent dispensing section and removing ATP inside the pipe of the reagent dispensing section; and a step of replacing the ATP removal reagent inside the pipe of the reagent dispensing section with control water.

In this case, the sterilization reagent contains surfactant, trichloroacetic acid (TCA), tris buffers, ethanol, and lytic enzyme having protease activity. Also in this case, the ATP removal reagent contains at least one of apyrase, alkaline phosphatase, acid phosphatase, hexokinase, adenosine triphosphatase and adenosine phosphate deaminase.

According to the present invention, there is provided a pipe cleaning mechanism of a luminescence measurement apparatus including: a reagent/carrier container mounting section on which a sterilization reagent or an ATP removal reagent is placed; a hot-water supply section which connects a buffer supply section and a hot-water supply nozzle with a pipe and comprises a membrane filter and a pump on the pipe; and a hot-water supply cleaning control portion which supplies the sterilization reagent or the ATP removal reagent from the hot-water supply nozzle to the membrane filter by reversing the pump to apply sterilization processing or ATP removal processing to an inside of the pipe, and replaces the sterilization reagent or the ATP removal reagent with a hot-water buffer.

According to the present invention, there is provided a pipe cleaning mechanism of a luminescence measurement apparatus including: a buffer supply section on which a sterilization reagent or an ATP removal reagent is placed; a reagent dispensing section which connects the buffer supply section and a reagent dispensing nozzle with a pipe and comprises a syringe pump on the pipe; and a reagent dispensing cleaning control portion which introduces the sterilization reagent or the ATP removal reagent into the pipe by operating the syringe pump to apply sterilization processing or ATP removal processing to an inside of the pipe, and replaces the sterilization reagent or the ATP removal reagent with control water.

### Advantageous Effects of Invention

According to the pipe cleaning method and the pipe cleaning mechanism in the luminescence measurement apparatus of the present invention according to the above method and constitution, a supply pipe contaminated by bacteria and so on can be automatically cleaned easily and effectively.
Accordingly, the measurement accuracy and sensitivity of the luminescence measurement apparatus can be enhanced. Further, contaminated hot-water supply nozzle or reagent dispensing nozzle can be reused to thereby contribute to cost reduction.

### Brief Description of Drawings

FIG. 1 is an explanatory view showing a schematic configuration of a luminescence measurement apparatus.
FIG. 2 is an explanatory view of a triaxial actuator.
FIG. 3-1 is a front block diagram showing a relationship between an overall configuration of the triaxial actuator and a dispensing nozzle.
FIG. 3-2 is a block diagram showing an upper surface configuration in FIG. 3-1.
FIG. 4 is a reference perspective view showing a relationship between a Z-axis mechanism portion and a reagent dispensing nozzle.
FIG. 5-1 is a top view of a reagent/carrier container mounting section.
FIG. 5-2 is a top view of a reagent cartridge.
FIG. 6 is a view showing a processing flow in the luminescence measurement apparatus.
FIG. 7 is an explanatory view of a cleaning mechanism of a hot-water supply section.
FIG. 8 is an explanatory view of a cleaning mechanism of a reagent dispensing section.
FIG. 9 is a processing flow of a cleaning method of the hot-water supply section.
FIG. 10 is a processing flow of a cleaning method of the reagent dispensing section.

### Description of Embodiments

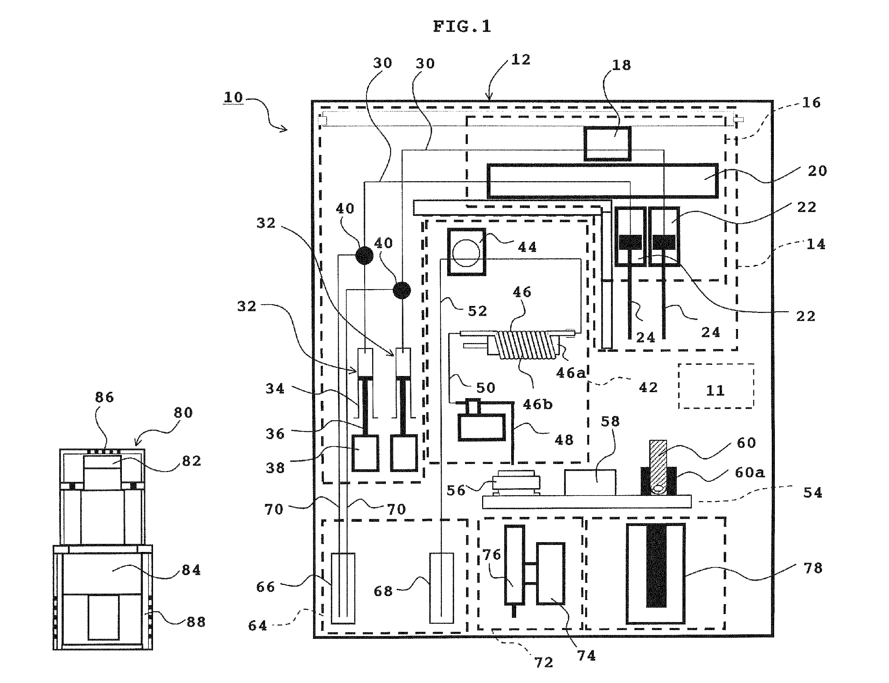

Hereinafter, an embodiment according to a pipe cleaning method and a pipe cleaning mechanism in a luminescence measurement apparatus of the present invention will be described in detail with reference to the drawings.
First, an overall configuration of a luminescence measurement apparatus 10 mounting a pipe cleaning mechanism (hereinafter simply referred to as a pipe cleaning mechanism) of the luminescence measurement apparatus (BIOMAYTECTOR (registered trademark)) of the present invention will be described with reference to FIG. 1. The luminescence measurement apparatus 10 to be described in the present embodiment is constituted of a count unit 12 and a collection unit 80.

The count unit 12 has a reagent dispensing section 14, a hot-water supply section 42, a reagent/carrier container mounting section 54, a buffer supply section 64, a filtration section 72, a PMT (Photomultiplier tube) section 78, and an input/control section 11. Such the respective components are arranged in a casing.

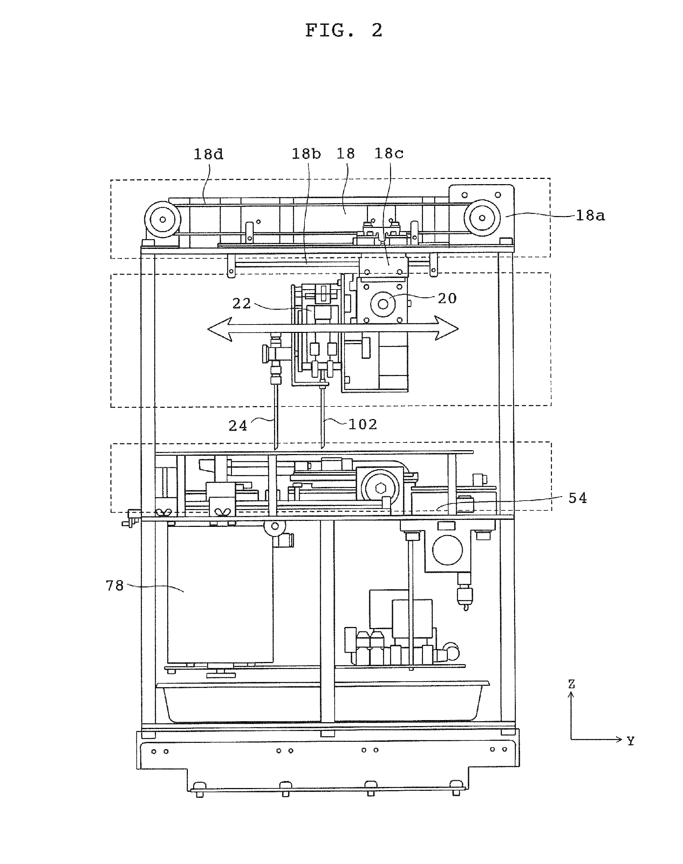

The reagent dispensing section 14 is basically constituted of a triaxial actuator 16, a reagent dispensing nozzle 24, and a syringe pump 32. The triaxial actuator 16 is means for moving the reagent dispensing nozzle 24 to be described later in detail to a desired position. Thus, as illustrated in detail in FIG. 2, the triaxial actuator 16 is constituted of a Y-axis mechanism portion 18, an X-axis mechanism portion 20, and a Z-axis mechanism portion 22. The Y-axis mechanism portion 18 can be disposed at an upper portion of the apparatus, whereby space is not restricted so much. Thus, in the count unit 12 in the present embodiment, a stepping motor 18a is used as a driving actuator, and an operation portion 18c attached to a linear guide 18b is slid by a driving belt 18d.

On the other hand, the X-axis mechanism portion 20 and the Z-axis mechanism portion 22 attached to the operation portion 18c are difficult to have enough space. Thus, a compact actuator is employed for both the X-axis mechanism portion 20 and the Z-axis mechanism portion 22. The compact actuator is a small-size actuator which integrates a motor and a projecting axis by incorporating a large-diameter thrust axis system into a hollow rotor. As an operation principle, the driving system is a stepping motor and the projecting axis is a ball screw. Accordingly, even such a compact size enables highly accurate positioning.

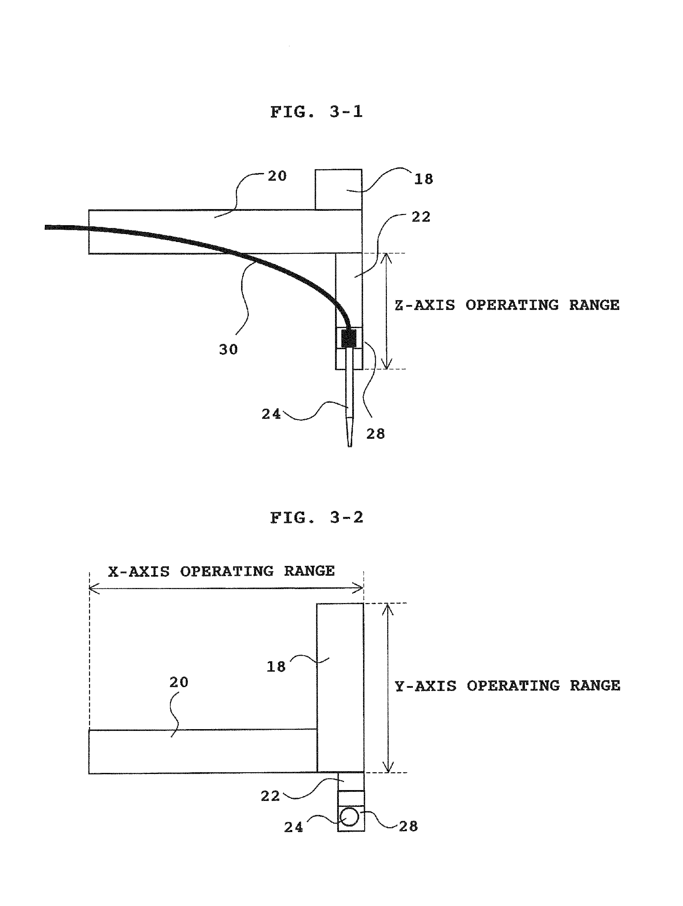

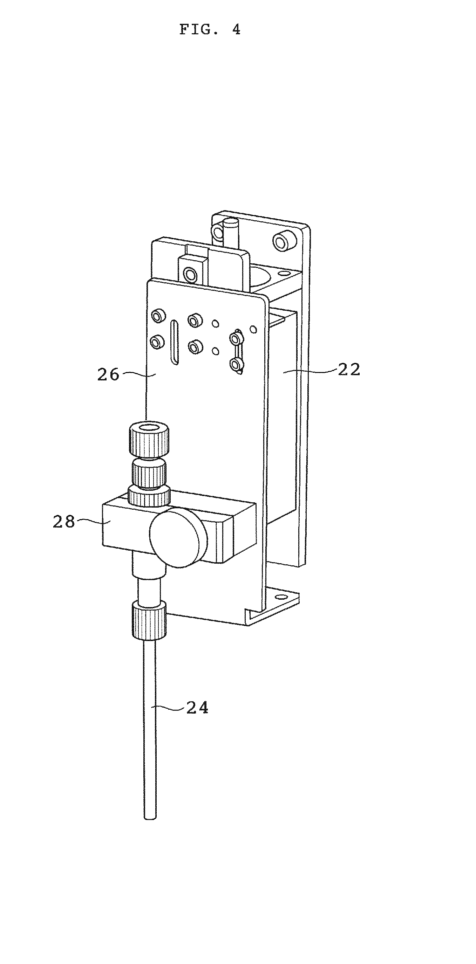

The reagent dispensing nozzle 24 is a nozzle which has a role of dividing and dispensing various reagents used for luminescence counting. As shown in FIGS. 3-1, 3-2, and 4, the reagent dispensing nozzle 24 is supported by a fixation block 28 equipped in a slide guide 26 attached to the compact actuator as the Z-axis mechanism portion 22. Such the supporting configuration facilitates stabilization of an up-and-down operation. FIG. 3-1 is a front block diagram showing a relationship between an overall configuration of the triaxial actuator 16 and the reagent dispensing nozzle 24. FIG. 3-2 is a block diagram showing an upper surface configuration in FIG. 3-1. FIG. 4 is a reference perspective view showing a relationship between the Z-axis mechanism portion 22 and the reagent dispensing nozzle 24.

A dispensing operation pipe 30 connected to the syringe pump 32 to be described later in detail and constituting a portion of a supply pipe is connected to a back end of the reagent dispensing nozzle 24. The reagent dispensing nozzle 24 divides a reagent by applying negative pressure in this nozzle through the dispensing operation pipe 30 and dispenses thus divided reagent by applying positive pressure in the nozzle. The reagent dispensing nozzle 24 may be formed by a resin-made pipe, metal-made pipe as well as glass-made pipe.

The syringe pump 32 has a role of controlling an actuation fluid (pure water in the present embodiment) for dividing and dispensing a reagent through the reagent dispensing nozzle 24. The syringe pump 32 is basically constituted of a syringe 34, a plunger 36, and an actuator 38. The syringe 34 is a tank for storing pure water being an actuation fluid. The plunger 36 is a push stick which has a role of introducing pure water into the syringe 34 and discharging pure water by applying negative pressure or positive pressure in the syringe 34. The actuator 38 is a driving means for plunging or extracting the plunger 36. It is possible to accurately control positioning by using a stepping motor and a ball screw for the actuator 38.

One end of the dispensing operation pipe 30 is connected to a tip end of the syringe 34 in the syringe pump 32 having the above constitution, and other end of the dispensing operation pipe 30 is connected to the reagent dispensing nozzle 24. The dispensing operation pipe 30 is connected thus, whereby pure water accumulates in the syringe 34 when the plunger 36 is extracted, negative pressure is applied inside the nozzle of the reagent dispensing nozzle 24, and a reagent is injected (divided) into the reagent dispensing nozzle 24. On the contrary, when the plunger 36 is plunged, a pressure inside the reagent dispensing nozzle 24 increases because pure water discharged from the syringe 34 is moved to the reagent dispensing nozzle 24, and the reagent accumulated inside the reagent dispensing nozzle 24 is ejected (dispensed).

A buffer supply pipe 70 constituting a portion of the supply pipe connected to a buffer supply section 64 to be described later in detail is connected to the dispensing operation pipe 30 through a distribution valve 40 such as three-way valve. According to this constitution, pure water as an operation fluid stored inside the dispensing operation pipe 30 can be periodically changed. Consequently, error of count data due to contamination of the operation fluid can be prevented.

The hot-water supply section 42 has a role of supplying hot water for diluting the collection carrier. The hot-water supply section 42 is basically constituted of a peristaltic pump 44, a heater 46, and a hot-water supply nozzle 48. The peristaltic pump 44 is basically constituted of a resin tube, a roller, and an actuator (none of them shown in the figure). The resin tube is a tube used for sending solution, and transportation fluid (pure water in the present embodiment) flows therein. The tube which is mechanically compressed by the roller preferably has flexibility and durability and, for example, silicon tube is preferable. The roller has a role of repeating rotation and revolution while compressing the resin tube to push out the transportation fluid, which is closed in a compression region, in a direction of roller revolution. Force of reverting to the original form is applied on the resin tube thus compressed by the roller. Since the transportation fluid is an incompressible fluid, plural rollers are continuously revolved, whereby the transportation fluid is also continuously pushed out. Here, the actuator may be those capable of rotating plural rollers.

According to the peristaltic pump 44 having the above constitution, the pump itself is not contaminated since a contact portion with the transportation fluid (pure water in the present embodiment) is only inside the tube where the transportation fluid flows. Thus, it is easy to maintain an aseptic condition and clean.

The heater 46 has a role of heating the pure water as a transportation fluid. Although the configuration of the heater 46 is not limited particularly, a cartridge heater and a tube heater are preferably employed when compactness is emphasized. For example, when the cartridge heater is employed, a heater body 46a is wound around by a pipe made of metal (hereinafter simply referred to as metal pipe 46b) , and the pure water as a transportation fluid may be sent through the metal pipe 46b wound thus. According to such constitution, the pure water inside the metal pipe 46b is heated by heat transfer. Meanwhile, when a tube heater is employed, the resin pipe (tube) and so on is wound around by a rubber heater, and the pure water as a transportation fluid sent through the resin tube is heated. According to this constitution, a heat transfer rate becomes high by employing a silicon resin and so on for the resin tube. Since both of the resin tube and the rubber heater have flexibility, possibility of arrangement is high, and a long heat region can be secured. Thus, it is possible to avoid temperature decrease after being heated, in other word, facilitate temperature stabilization. Although arrangement position of the heater 46 is not limited particularly, a fluid transportation distance after being heated is preferably short in order to avoid temperature decrease after being heated. Thus, in the count unit 12 according to the present embodiment, the heater 46 is arranged between the above-described peristaltic pump 44 and the hot-water supply nozzle 48 to be described later in detail.

The hot-water supply nozzle 48 is an ejection nozzle for supplying hot water (pure water) which is transferred by the peristaltic pump 44 and heated by the heater 46 to a collection carrier cartridge 82 which is arranged in the reagent/carrier container mounting section 54 to be described later in detail. It may be configured by a metal (SUS) pipe and so on or may be a glass pipe and a resin pipe as well. A hot water supply pipe 50 connected to the peristaltic pump 44 through the heater 46 and constituting a portion of the supply pipe is connected to an end on the opposite side of the ejection port in the hot-water supply nozzle 48. A suction side pipe 52 (constituting a portion of the supply pipe) in the peristaltic pump 44 is connected to the buffer supply section 64 to be described later in detail.
According to the hot-water supply section 42 having the above constitution, the peristaltic pump 44 is driven, whereby hot water can be continuously ejected from the hot-water supply nozzle 48.

The reagent/carrier container mounting section 54 is a stage for arranging a reagent used for the luminescence measurement and a collection carrier. A collection carrier cartridge holder 56, a reagent rack 58, a luminescence count tube holder 60a, and so on are arranged in the reagent/carrier container mounting section 54. The collection carrier cartridge holder 56 is a holder for setting the collection carrier cartridge 82. The collection carrier cartridge holder 56 is provided with a heat block having a heater so that thus set collection carrier cartridge 82 can be heated.

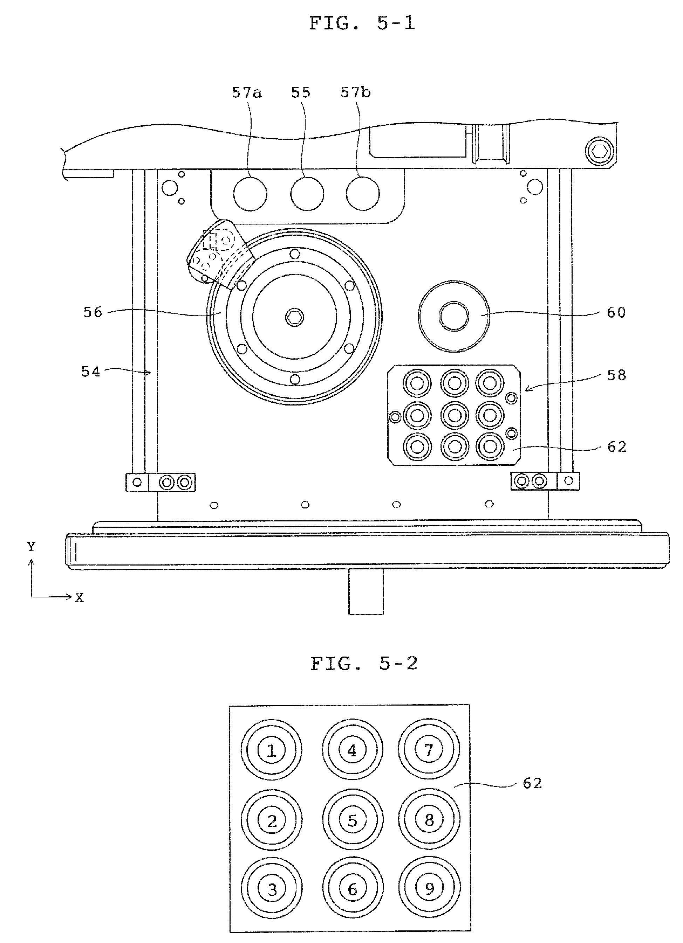

The reagent cartridge filled with a reagent used for the luminescence measurement is disposed in the reagent rack 58. As shown in FIGS. 5-1 and 5-2, the reagent cartridge is a package where various types of reagents, pure water, and so on are filled in respective recesses which are separated into plural pieces (nine in an example shown in FIG. 5-2), and an upper opening of the recess is sealed with an aluminum sheet (film) and so on. According to this constitution, the reagent is not exposed to outside until the aluminum sheet is removed and opened, and stocked reagent is not contaminated by viable bacteria and so on. FIG. 5-1 is a top view of the reagent/carrier container mounting section 54, and FIG. 5-2 is a top view of the reagent cartridge 62.

A luminescence count tube 60 is disposed in the luminescence count tube holder 60a. The luminescence count tube 60 is a micro tube for conducting a luminescence reaction of ATP which is extracted from viable bacteria collected by the collection carrier cartridge 82.

In the reagent/carrier container mounting section 54, a discharging position (hot-water discharging position 55 and reagent discharging positions 57a and 57b) where drainage is discharged outside from the hot-water supply nozzle 48 or the reagent dispensing nozzle 24 is disposed. Plural discharge pipes connected to a discharging tank (not shown) are attached to the respective discharging positions.

The buffer supply section 64 has a reagent dispensing nozzle control water tank (hereafter simply referred to as control water tank 66) and a hot-water supply water tank 68. Since a step of removing free ATP is not included in a step after the reagent dispensing nozzle 24 is used, a cleanliness level of the water (pure water) in the control water tank 66 filled in the dispensing operation pipe 30 which connects the syringe pump 32 and the reagent dispensing nozzle 24 is required to keep higher than the cleanliness level of the water (pure water) in the hot-water supply water tank 68. Thus, volume of the control water tank 66 is smaller than that of the hot-water supply water tank 68 and accumulated water is appropriately exchanged. Water in the hot-water supply water tank 68 requires larger volume than that of the control water tank 66, because the water is poured in the collection carrier cartridge 82 set in the collection carrier cartridge holder 56.

The control water tank 66 set as described above is connected to the distribution valve 40 in the dispensing operation pipe 30 through the buffer supply pipe 70 so that pure water can be supplied to the dispensing operation pipe 30 by switching the distribution valve 40. The hot-water supply water tank 68 is connected to a suction side of the peristaltic pump 44 described above and suctioned by drive of the peristaltic pump 44.

The filtration section 72 has a role of removing a collection carrier in the collection carrier cartridge 82 which is diluted by hot water ejected from the hot-water supply nozzle 48. The filtration section 72 is basically constituted of a suction pump 74 and a suction head 76. The suction pump 74 is a pump for producing negative pressure inside the suction head 76 to be described later in detail. Further, the suction head 76 is a cylindrical body with a tip end opening.

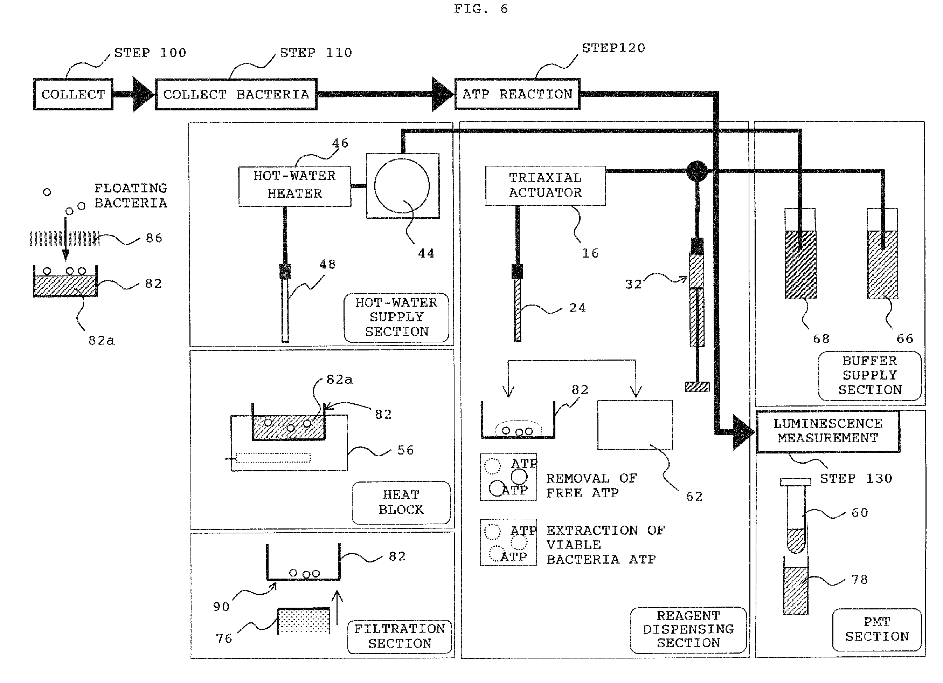

In the filtration section 72 having the above basic constitution, a tip end is connected to a lower portion of the collection carrier cartridge holder 56, and the suction pump 74 is operated, whereby the collection carrier diluted by hot water can be suctioned and removed trough a recovery filter 90 (see, FIG. 6).

The PMT section 78 has a role of measuring luminescence amount of the ATP in the luminescence count tube 60. In the count unit 12 in the present embodiment, the PMT section 78 is a head-on type and arranged at a lower portion of the luminescence count tube 60 described above. According to this constitution, light produced in the luminescence count tube 60 enters from the upper portion of the PMT section 78, and the luminescence amount is counted.

The input/control section 11 is a component which controls the above components with respect to an input value to the luminescence count apparatus 10 and thereby automates luminescence measurement.
The collection unit 80 is a device for collecting viable bacteria in the air into the collection carrier cartridge 82. The collection unit 80 is basically constituted of the collection carrier cartridge 82, a blower fan 84, an impactor nozzle head 86, and an exhaust filer 88.

The collection carrier cartridge 82 has a role of collecting viable bacteria floating in the air. The collection carrier cartridge 82 is provided with a collection carrier 82a for collecting viable bacteria (see, FIG. 6). The collection carrier 82a equipped in the collection carrier cartridge 82 according to the present embodiment is gelled at normal temperature and is solated by heating. Further, a cavity (not shown) to be filled with dilution hot water is provided in a lower portion of the collection carrier 82a. The recovery filter 90 (see, FIG. 6) for filtering hot water which dilutes the collection carrier 82a is equipped in a lower portion of the cavity.

The blower fan 84 has a role of suctioning air into the collection unit 80 and striking floating bacteria in the air against the collection carrier 82a in the collection carrier cartridge 82 described above. In order to prevent detection error due to contamination of the blower fan 84 itself, the blower fan 84 is preferably arranged in a downstream side from the arrangement position of the collection carrier cartridge 82 (on a lower side in the collection unit 80 according to the present embodiment, because the suction port is located in an upper portion). In the collection unit 80, an amount of the air to be collected can be determined based on a blow amount and operation time of the blower fan 84.

The impactor nozzle head 86 is disposed in an upper portion of the collection unit 80 and has a role of a cover and accelerator of the collection carrier cartridge 82. A velocity of the air inflowing into the collection unit 80 is required high to some extent for striking viable bacteria against the collection carrier cartridge 82 and being supported. However, in order to obtain high velocity, there is a concern about size increase of the collection unit 80 because a size of the blower fan 84 and the rotation rate are required to increase.

In the impactor nozzle head 86, plural small-diameter openings are provided so that the air suctioned by the blower fan 84 passes through the small-diameter openings and strikes against the collection carrier 82a. In a case of constant air flow, a velocity of passing fluid can be increased by narrowing an area of flow passage. Thus, necessary velocity can be obtained without increasing the size and the rotation rate of the blower fan 84.

The exhaust filter 88 is arranged on the downstream side of the blower fan 84 (on the lower side in the collection unit 80 according to the present embodiment) and has a role of removing dust included in the exhaust.
According to the above constitution, the collection unit 80 of the present embodiment can be made compact and light.

In the luminescence measurement apparatus 10 constituted of the count unit 12 and the collection unit 80 having the above basic constitution, first, viable bacteria in the air are collected by the collection unit 80 (step 100: see, FIG. 6).

Next, the collection carrier cartridge 82 collecting viable bacteria is taken out from the collection unit 80 and set in the collection carrier cartridge holder 56 of the count unit 12. The collection carrier cartridge 82 set in the collection carrier cartridge holder 56 is heated by the heat block. The collection carrier is solated by heating. The solated collection carrier 82a is diluted by hot water supplied from the hot-water supply nozzle 48. The diluted collection carrier 82a is suctioned and removed by the filtration section 72 through the recovery filter 90. Viable bacteria and free ATP collected by the collection carrier 82a remain in the recovery filter 90 (step 110: see, FIG. 6).

After filtering the collection carrier 82a, the reagent dispensing section 14 is operated for removing free ATP and dividing a viable bacteria sample. The free ATP is ATP derived from killed bacteria and is required to be removed in advance so as to prevent from being counted in measurement data. Thus, first, an ATP removal reagent is divided from the reagent cartridge 62 by the reagent dispensing nozzle 24 and dispensed into the collection carrier cartridge 82, and free ATP is removed. By virtue of this operation, it is possible to prevent occurrence of count error of a luminescence amount due to a luminescence reaction caused by the free ATP. Next, an ATP extraction reagent is dispensed on the recovery filter 90 in the collection carrier cartridge 82 having been removed of the free ATP, and ATP is extracted from viable bacteria on the recovery filter 90 (step 120: see, FIG. 6).

An ATP extraction sample is divided from the recovery filter 90 in the collection carrier cartridge 82 and dispended into the luminescence count tube 60. A luminescence reagent is previously dispensed in the luminescence count tube 60, and a luminescence reaction starts simultaneously with dispensing of ATP extraction sample. In the luminescence reaction in the luminescence count tube 60, the luminescence strength is measured by the PMT section 78 (step 130: see, FIG. 6).

According to the luminescence measurement apparatus 10 having the above basic constitution, since processes from division of the viable bacteria sample from the collection carrier cartridge 82 to count of luminescence amount are automatically carried out inside the count unit 12 covered by a casing, there is a little possibility that a viable bacteria sample is affected by contamination. Further, the luminescence reagent is previously dispensed into the luminescence count tube 60 set in the reagent/carrier container mounting section 54, and then the ATP extraction sample from viable bacteria is dispensed; therefore, it is possible to count a self-background light of the reagent and a maximum luminescence amount obtained when a luminescence reaction starts after the sample dispensing as well. Thus, a relationship between luminescence amount and luminescence time can be accurately obtained, and calculation of an ATP amount based on a luminescence amount, in other words, count of viable bacteria number can be accurately performed.

In the buffer supply section 64 of the luminescence measurement apparatus 10 according to the above constitution, the dispensing operation pipe 30 or an end of the hot water supply pipe 50 is inserted into a bottle of the control water tank 66 and the hot-water supply water tank 68 being opened, and a supply pipe route is an open system. Accordingly, there is a contamination problem such as contamination of various pipes caused by mixing of foreign matters through an opening of a tank. Especially, since hot water in the hot-water supply water tank 68 is supplied directly to the collection carrier 82a, the mixing of foreign matters is undesirable.

For example, when the hot-water supply nozzle 48 and the reagent dispensing nozzle 24 are in contact with the collection carrier cartridge 82, or when a reagent in the following process is dispensed in such a state that various reagents in the previous process are adhered, there is a contamination problem that foreign matters are mixed into a pipe from a nozzle tip end to affect measurement accuracy and sensitivity.

Thus, a cleaning method of a pipe of a luminescence measurement apparatus according to the present invention includes a bacteriolytic process of supplying a sterilization reagent into a supply pipe for hot water or a reagent of the luminescence measurement apparatus and sterilizing an inside of the supply pipe, and an ATP removal process of supplying an ATP removal reagent into the supply pipe after the sterilization of the inside of the pipe and removing ATP inside the pipe, and a process of replacing the ATP removal reagent in the supply pipe with pure water.

The sterilization reagent is used for dissolving a cell membrane of viable bacteria and extracting ATP therein and contains surfactant, trichloroacetic acid (TCA), tris buffers, ethanol, and lytic enzyme having protease activity.

The ATP removal reagent is a reagent which decomposes and removes extracted ATP and contains at least one of apyrase, alkaline phosphatase, acid phosphatase, hexokinase, adenosine triphosphatase and adenosine phosphate deaminase.

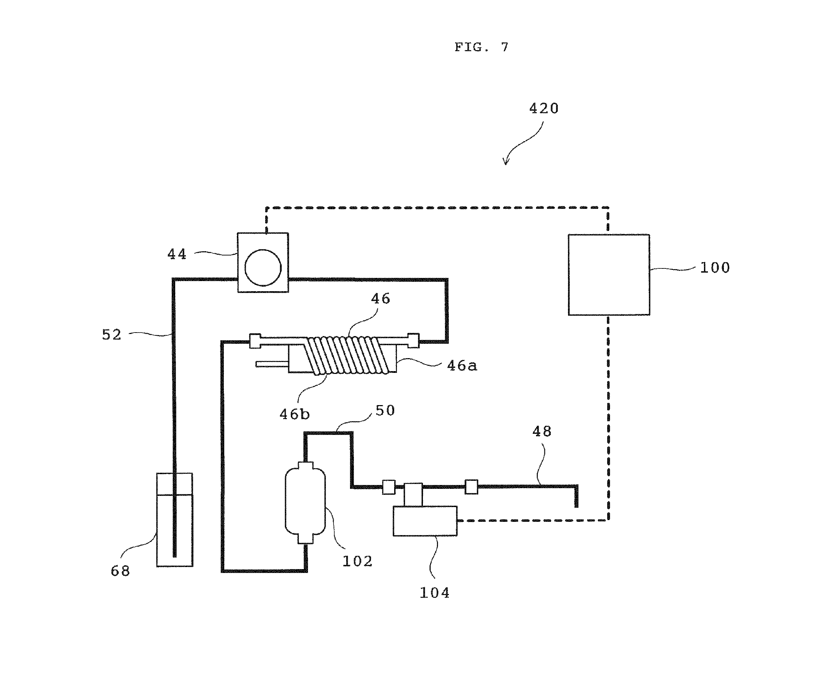

FIG. 7 is an exaplanatory view of a cleaning mechanism of a hot-water supply portion. More specifically, the cleaning mechanism of a hot-water supply section 420 of the luminescence measurement apparatus is basically constituted of the peristaltic pump 44 of the hot-water supply section 42, the heater 46, and the hot-water supply nozzle 48 shown in FIG. 1 and newly provided with a membrane filter 102, an actuator 104, and a hot-water supply cleaning control portion 100.

When the hot-water supply section 420 is cleaned, bottle containers containing, respectively, a sterilization reagent and an ATP removal reagent as cleaning liquids is placed in the reagent rack 58 of the reagent/carrier container mounting section 54.
The membrane filter 102 is installed in the hot water supply pipe 50 between the hot-water supply nozzle 48 and the heater 46. As the membrane filter 102, hollow fiber membrane such as a UF membrane can be used as an example. The membrane filter 102 has plural fine pores, and bacteria are trapped by the fine pores to allow to be separated from a liquid.

The actuator 104 is means for moving the hot-water supply nozzle 48 to a desired position. As an example of the actuator 104, biaxial actuator in XY directions or a triaxial actuator may be used.

The hot-water supply cleaning control portion 100 electrically connects the peristaltic pump 44 and the actuator 104. The hot-water supply cleaning control portion 100 operates the actuator 104 to move the hot-water supply nozzle 48 from an origin position on the collection carrier cartridge holder 56 of the reagent/carrier container mounting section 54 onto the reagent rack 58. The peristaltic pump 44 is reversed, and the reagent in the sterilization reagent bottle or the APT removal reagent bottle can be divided to the membrane filter 102. Further, the actuator 104 is operated, and the hot-water supply nozzle 48 can be moved to the hot-water discharging position 55. The peristaltic pump 44 is rotated in the normal direction, a hot-water buffer is supplied from the hot-water supply water tank 68, and the sterilization reagent or the ATP removal reagent in the hot water supply pipe 50 can be discharged to the hot-water discharging position 55. The ATP removal reagent in a course from the hot-water supply nozzle 48 to the membrane filter 102 is replaced with the hot-water buffer.

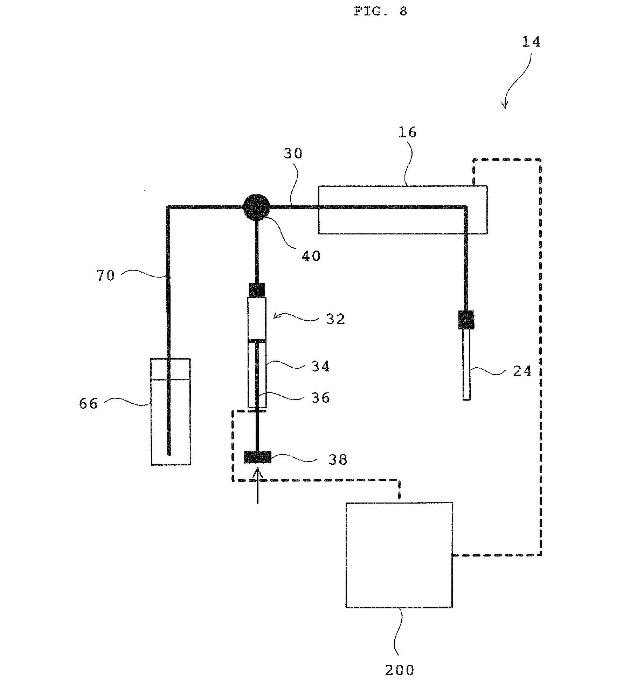

FIG. 8 is an explanatory view of a cleaning mechanism of the reagent dispensing section. More specifically, a cleaning mechanism of the reagent dispensing section 14 of the luminescence measurement apparatus is basically constituted of the triaxial actuator 16 of the reagent dispensing section 14, the reagent dispensing nozzle 24, and the syringe pump 32 and newly provided with a reagent dispensing cleaning control portion 200.
When the reagent dispensing section 14 is cleaned, reagent tanks containing, respectively, a sterilization reagent and an ATP removal reagent as cleaning liquids are placed in place of the control water tank 66 of the buffer supply section 64.

The reagent dispensing cleaning control portion 200 electrically connects the triaxial actuator 16 and the syringe pump 32. The reagent dispensing cleaning control portion 200 operates the syringe pump 32 and can divide the sterilization reagent or the ATP removal reagent from the reagent tank of the buffer supply section 64. The reagent dispensing cleaning control portion 200 operates the syringe pump 32 to introduce the sterilization reagent or the ATP removal reagent into a pipe, and, thus, to apply sterilization processing or ATP removal processing to the inside of the pipe, whereby each reagent can be replaced with control water. Further, the triaxial actuator 16 is operated, and the reagent dispensing nozzle 24 can be moved to the reagent discharging position 57.

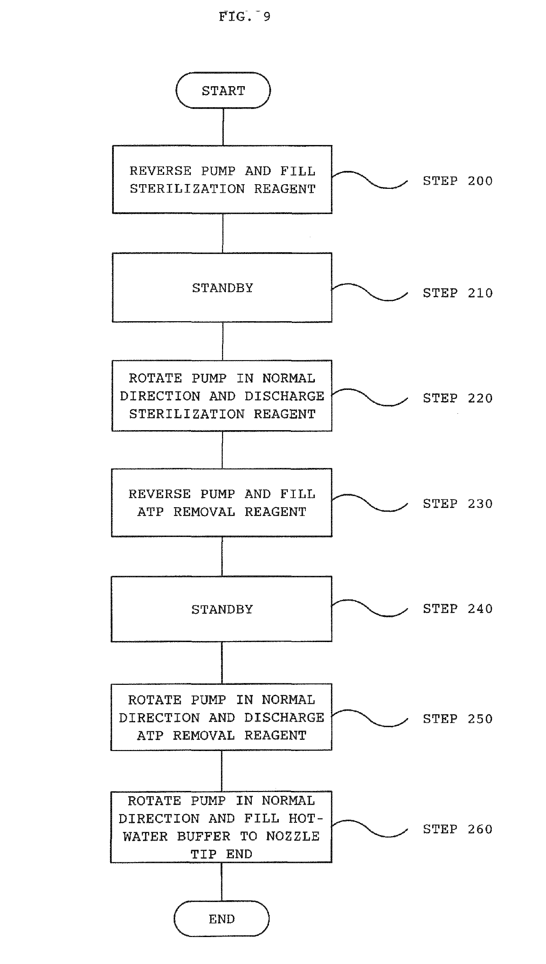

Next, the cleaning method of a pipe of the luminescence measurement apparatus according to the above constitution will be hereinafter described. FIG. 9 is a processing flow of a cleaning method of the hot-water supply section.
Since the hot-water supply section supplies several ten ml of hot water, dividing amount or dispensing amount is large in comparison with the reagent dispensing section, and thus cleaning of the entire supply pipe is inefficient. Thus, the membrane filter 102 is formed on a pipe of the hot water supply pipe 50, and an inside of a pipe between the hot-water supply nozzle 48 and the membrane filter 102 particularly easily affected by contamination is cleaned.

First, the bottle containers containing, respectively, a sterilization reagent and an ATP removal reagent as cleaning liquids are placed in the reagent rack 58 of the reagent/carrier container mounting section 54.
The actuator 104 is operated by the hot-water supply cleaning control portion 100 to move the hot-water supply nozzle 48 from the origin position on the collection carrier cartridge holder 56 of the reagent/carrier container mounting section 54 onto the reagent rack 58. Then, the peristaltic pump 44 is reversed, the sterilization reagent in the sterilization reagent bottle is divided to the membrane filter 102, and the reagent is filled in the pipe of the hot water supply pipe 50 (step 200). When a cleaning liquid such as the sterilization reagent and the ATP removal reagent is supplied into the hot water supply pipe 50 from the hot-water supply nozzle 48, bacteria and so on mixed in the pipe from the nozzle is trapped by the membrane filter 102; therefore, the bacteria and so on are not mixed to the buffer supply section 64 side through the membrane filter 102, and contamination is prevented. Accordingly, the cleaning liquid may be supplied from the hot-water supply nozzle 48 to the membrane filter 102.

The luminescence measurement apparatus is made standby until a bacteriolytic reaction of viable bacteria is sufficiently performed in a pipe by using the sterilization reagent (step 210).
The hot-water supply cleaning control portion 100 operates the actuator 104 to move the hot-water supply nozzle 48 to the hot-water discharging position 55. Then, the peristaltic pump 44 is rotated in the normal direction to discharge the sterilization reagent in a pipe from the nozzle to the discharging position (step 220). Those processes are included in the bacteriolytic process of sterilizing the inside of a pipe.

Next, the hot-water supply cleaning control portion 100 operates the actuator 104 to move the hot-water supply nozzle 48 from the hot-water discharging position 55 onto the reagent rack 58. The peristaltic pump 44 is reversed to divide the ATP removal reagent from the ATP removal reagent bottle to the membrane filter 102, and the reagent is filled in the pipe of the hot water supply pipe 50 (step 230).

The luminescence measurement apparatus is made standby until a reaction for removing and eliminating ATP is sufficiently performed in a pipe by using the ATP removal reagent (step 240).
The hot-water supply cleaning control portion 100 operates the actuator 104 to move the hot-water supply nozzle 48 to the hot-water discharging position 55. Then, the peristaltic pump 44 is rotated in the normal direction to discharge the ATP removal reagent in a pipe from the nozzle to the discharging position (step 250). Those processes are included in the ATP removal process of removing ATP in a pipe. Further, the peristaltic pump 44 is continuously rotated in the normal direction while the hot-water supply nozzle 48 is located at the hot-water discharging position 55 to supply pure water (hot-water buffer) from the hot-water supply water tank 68, and, thus, to clean the reagent remaining in the pipe, and, at the same time, a course from the inside of the pipe to the nozzle tip end is filled with the hot-water buffer (step 260).

A cleaning button (not shown) of the luminescence measurement apparatus is operated, whereby the processes from steps 200 to 260 can be automatically performed.
According to the above cleaning method, even in a pipe with large dividing and dispensing amounts, the local pipe route from the hot-water supply nozzle 48 to the membrane filter is cleaned, so that it is possible to effectively sterilize the inside of a pipe and remove ATP in the pipe.

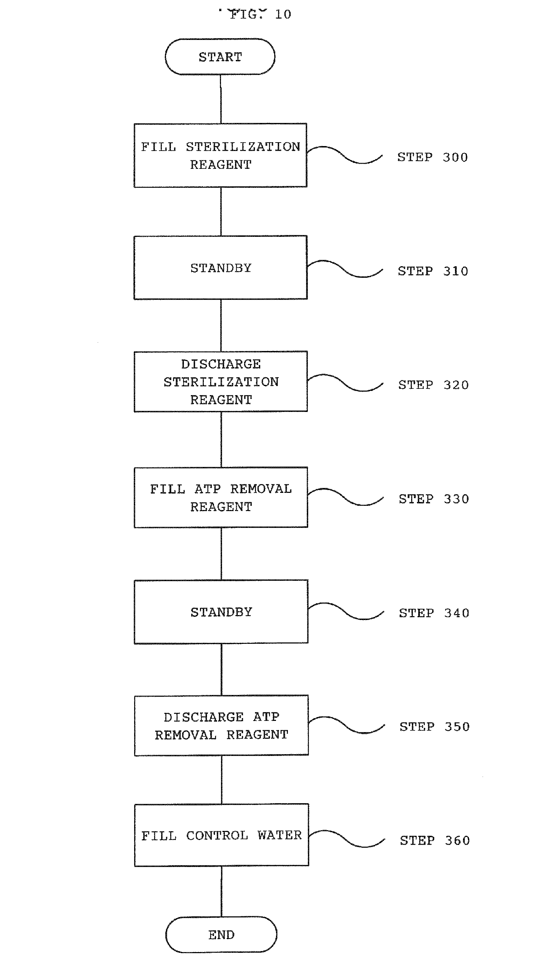

FIG. 10 is a processing flow of a cleaning method of the reagent dispensing section.
In the reagent dispensing section, since several ten ml of reagent is supplied, the dividing or dispensing amount is small in comparison with the hot-water supply section. Thus, a cleaning liquid is supplied from the buffer supply section 64 to clean the entire pipe of the reagent dispensing section.

First, reagent tanks containing, respectively, a sterilization reagent and an ATP removal reagent as cleaning liquids are placed in place of the control water tank 66 of the buffer supply section 64.
The triaxial actuator 16 is operated by the reagent dispensing cleaning control portion 200 to move the reagent dispensing nozzle 24 onto the reagent discharging position 57 of the reagent/carrier container mounting section 54. Then, the syringe pump 32 is operated (negative pressure is applied in the syringe) to fill the sterilization reagent in the syringe and a buffer supply pipe 70 from the reagent tank of the buffer supply section 64. Subsequently, the syringe pump 32 is operated (positive pressure is applied in the syringe) to supply the sterilization reagent from the buffer supply pipe 70 to the dispensing operation pipe 30, and this operation is repeated to thereby fill the reagent in a pipe (step 300).

The luminescence measurement apparatus is made standby until a bacteriolytic reaction of viable bacteria is sufficiently performed in a pipe by using the sterilization reagent (step 310).
The syringe pump 32 is operated (positive pressure is applied in the syringe) to discharge the sterilization reagent in the pipe from the reagent dispensing nozzle 24 to the reagent discharging position 57 (step 320). Those processes are included in the bacteriolytic process of sterilizing the inside of a pipe.

The syringe pump 32 is operated (negative pressure is applied in the syringe) to fill the ATP removal reagent from the reagent tank of the buffer supply section 64 to the syringe and the inside of the buffer supply pipe 70. Subsequently, the syringe pump 32 is operated (positive pressure is applied in the syringe) to supply the ATP removal reagent from the buffer supply pipe 70 to the dispensing operation pipe 30, and this operation is repeated to thereby fill the reagent in a pipe (step 330).
The luminescence measurement apparatus is made standby until a reaction for removing and eliminating ATP is sufficiently performed in a pipe by using the ATP removal reagent (step 340).

The syringe pump 32 is operated (positive pressure is applied in the syringe) to discharge the ATP removal reagent in the pipe to the reagent discharging position 57 (step 350). Those processes are included in the ATP removal process of removing ATP in a pipe. Subsequently, the reagent tank of the buffer supply section 64 is returned to the control water tank 66, and then the syringe pump 32 is operated (negative pressure is applied in the syringe) to fill control water from the control water tank 66 in the syringe and the buffer supply pipe 70. The syringe pump 32 is further operated (positive pressure is applied in the syringe) to supply the control water from the buffer supply pipe 70 to the dispensing operation pipe 30. This operation is repeated to remove and clean the reagent remaining in the pipe, and, at the same time, new control water is filled in a course from the inside of the pipe to the nozzle tip end (step 360).

A cleaning button (not shown) of the luminescence measurement apparatus is operated, whereby the processes from steps 300 to 360 can be automatically performed.
According to the above cleaning method, the entire pipe with small dividing and dispensing amounts can be effectively sterilized, and ATP inside a pipe can be removed.

In the hot-water supply section and the reagent dispensing section cleaned thus, the luminescence reagent is divided from each nozzle and sampled, and the luminescence strength is measured, whereby the presence of contamination can be examined.
Accompanying automation of luminescence measurement using the input/control section 11, the cleaning operation in the hot-water supply cleaning control portion 100 and the reagent dispensing cleaning control portion 200 may be performed in parallel at the time of cleaning before and after the luminescence measurement.
According to the pipe cleaning method and the pipe cleaning mechanism in the luminescence measurement apparatus, a supply pipe contaminated by bacteria and so on can be automatically cleaned easily and effectively.

### Reference Sings List

10 ... luminescence measurement apparatus, 11 ... input/control section, 12 ... count unit, 14 ... reagent dispensing section, 16 ... triaxial actuator, 18 ... Y-axis mechanism portion, 18a ... stepping motor, 18b ... linear guide, 18c ... operation portion, 18d ... driving belt, 20 ... X-axis mechanism portion, 22 ... Z-axis mechanism portion, 24 ... reagent dispensing nozzle, 26 ... slide guide, 28 ... fixation block, 30 ... dispensing operation pipe, 32 ... syringe pump, 34 ... syringe, 36 ... plunger, 38 ... actuator, 40 ... distribution valve, 42, 420 ...hot-water supply section, 44 ... peristaltic pump, 46 ... heater, 46a ... heater body, 46b ... metal pipe, 48 ... hot-water supply nozzle, 50 ... hot water supply pipe, 52 ... suction side pipe, 54 ... reagent/carrier container mounting section, 55 ... hot-water discharging position, 56 ... collection carrier cartridge holder, 57 ... reagent discharging position, 58 ... reagent rack, 60 ... luminescence count tube, 64 ... buffer supply section, 66 ... control water tank, 68 ... hot-water supply water tank, 70 ... buffer supply pipe, 72 ... filtration section, 74 ... suction pump, 76 ... suction head, 78 ... PMT section, 80 ... collection unit, 82 ... collection carrier cartridge, 82a ... collection carrier, 84 ... blower fan, 86 ... impactor nozzle head, 88 ... exhaust filter, 90 ... recovery filter, 100 ... hot-water supply cleaning control portion, 102 ... membrane filter, 104 ... actuator, 200 ... reagent dispensing cleaning control portion

## Claims

1. A cleaning method of a pipe of a luminescence measurement apparatus comprising:
a bacteriolytic step of supplying a sterilization reagent into a supply pipe for hot water or a reagent in the luminescence measurement apparatus and sterilizing an inside of the supply pipe;
an ATP removal step of supplying an ATP removal reagent into the supply pipe after the sterilization of the inside of the supply pipe and removing ATP inside the supply pipe; and
a step of replacing the ATP removal reagent in the supply pipe with pure water.

2. A cleaning method of a pipe of a luminescence measurement apparatus comprising:
a bacteriolytic step of supplying a sterilization reagent from a hot-water supply nozzle from which hot water is supplied to a collection carrier to a membrane filter provided in a pipe on the upstream side of the hot-water supply nozzle and sterilizing an inside of the pipe;
an ATP removal step of supplying an ATP removal reagent from the hot-water supply nozzle to the membrane filter and removing ATP in the pipe; and
a step of replacing the ATP removal reagent in a course from the hot-water supply nozzle to the membrane filter with a hot-water buffer.

3. A cleaning method of a pipe of a luminescence measurement apparatus comprising:
a bacteriolytic step of supplying a sterilization reagent from a buffer supply section to a reagent dispensing section and sterilizing an inside of a pipe of the reagent dispensing section;
an ATP removal step of supplying an ATP removal reagent from the buffer supply section to the reagent dispensing section and removing ATP inside the pipe of the reagent dispensing section; and
a step of replacing the ATP removal reagent inside the pipe of the reagent dispensing section with control water.

4. The cleaning method for a luminescence measurement apparatus according to any one of claims 1 to 3, wherein the sterilization reagent contains surfactant, trichloroacetic acid (TCA), tris buffers, ethanol, and lytic enzyme having protease activity.

5. The cleaning method for a luminescence measurement apparatus according to any one of claims 1 to 3, wherein the ATP removal reagent contains at least one of apyrase, alkaline phosphatase, acid phosphatase, hexokinase, adenosine triphosphatase and adenosine phosphate deaminase.

6. A pipe cleaning mechanism of a luminescence measurement apparatus comprising:
a reagent/carrier container mounting section on which a sterilization reagent or an ATP removal reagent is placed;
a hot-water supply section which connects a buffer supply section and a hot-water supply nozzle with a pipe and comprises a membrane filter and a pump on the pipe; and
a hot-water supply cleaning control portion which supplies the sterilization reagent or the ATP removal reagent from the hot-water supply nozzle to the membrane filter by reversing the pump to apply sterilization processing or ATP removal processing to an inside of the pipe, and replaces the sterilization reagent or the ATP removal reagent with a hot-water buffer.

7. A pipe cleaning mechanism of a luminescence measurement apparatus comprising:
a buffer supply section on which a sterilization reagent or an ATP removal reagent is placed;
a reagent dispensing section which connects the buffer supply section and a reagent dispensing nozzle with a pipe and comprises a syringe pump on the pipe; and
a reagent dispensing cleaning control portion which introduces the sterilization reagent or the ATP removal reagent into the pipe by operating the syringe pump to apply sterilization processing or ATP removal processing to an inside of the pipe, and replaces the sterilization reagent or the ATP removal reagent with control water.
